# EUROPEAN PATENT SPECIFICATION

(11) **EP 2 683 756 B1**
(45) Date of publication and mention of the grant of the patent: **11.05.2016**
(21) Application number: 12707806.1
(22) Date of filing: 12.03.2012
(51) Int. Cl.: C08G 63/91

(54) **COMPOSITIONS FOR IMPROVING POLYESTERS**
ZUSAMMENSETZUNGEN ZUR VERBESSERUNG VON POLYESTERN
COMPOSITIONS POUR AMÉLIORER LES POLYESTERS

(30) Priority: 10.03.2011 EP 11157759
(43) Date of publication of application: 15.01.2014
(73) Proprietor: Nexam Chemical AB, 223 63 Lund (SE)
(72) Inventor: RÖME, Daniel, S-226 51 Lund (SE); PERSSON, David, S-217 43 Malmö (SE); ROSENBERG, Jan-Erik, S-311 41 Falkenberg (SE); MOMCILOVIC, Dane, S-226 51 Lund (SE)
(74) Representative: Ström & Gulliksson AB
(86) International application number: PCT/EP2012/054249
(87) International publication number: WO 2012/120148

(56) References cited:
- EP-A1- 0 639 612
- EP-A1- 2 163 577
- WO-A1-98/33837
- WO-A1-2006/122896

## Description

### Field of the invention

The present invention relates to an improved process for upgrading or improving polyesters, such as aliphatic polyesters, e.g. polyethylene terephthalate (PET) resins or polybutylene terephthalate (PBT) resins, by using chain-extenders, such as tetracarboxylic dianhydrides, e.g. pyromellitic dianhydride (PMDA).

### Background

Tetracarboxylic dianhydrides, such as PMDA, are well known hydroxyl-specific cross-linkers and chain extenders for improving PET (cf. US 4,145,466 and US 4,176,101). However, the long chain branching achieved with them may be difficult to control. By introducing a carboxylic acid specific cross-linker and chain extender, such as a bis- oxazoline, this may be managed.

A different approach to increase the degree of cross-linking is to use polyfunctional alcohols which may act as branching agent when used together with e.g. dianhydrides.

EP 2 163 577 relates to the use of dianhydrides together with an acid specific cross-linker/chain extender using a sterically hindered phenol (SHP) to further improve the material. The obtained material is stated to be suitable for forming a PET-foam. Further, EP 2 163 577 discloses that the effect of SHP:s first was encountered by Eastman (cf. US 5,693,681).

WO 90/10667A1 discloses the use of both dianhydride and polyol to modify anhydrous PET in order to prepare a foamed structure. Similarly, WO 98/33837A1 discloses a polymer blend comprising a polyester, a polyfunctional acid anhydride a polyhydric alcohol and a method for modifying a polyester comprising reacting the polyester with a polyfunctional acid anhydride and a polyhydric alcohol.

Upgrading of recycled polyethylene terephthalate (PET) is of interest, as the need for the use of virgin PET thus may be dispensed with. Further, improving the properties, such as the melt viscosity, is of interest in applications such as blow molding of bottles. In addition, PET with improved properties may also find use in foaming applications, such as in the production of trays for use in the food industry or as core material in sandwich structures for use as construction material.

In order to control the product quality and be able to optimize parameters, such as product thickness, in blow molding and extrusion processes, melt properties, such as shear viscosity (flow directional) and elongational viscosity (perpendicular to the flow direction) is of importance. To achieve a successful result, the ratio between these viscosity components needs to be adjusted in the process. This can be done utilizing chemical modification (melt modification) during the compounding prior to the final forming.

Very often the product requirements are to create thin structures, such as films, and foams,. To be able to achieve thin structures, the viscosity component perpendicular to the flow direction needs to be balanced with the viscosity component in the flow direction. Tailoring the system can for instance be done by utilizing intermolecular cyclization, adding reactive modifiers that react with active sites on the polymer backbone. Adjustments of the viscosity parameters will then be done by adding different concentration of melt modifiers or control the circumstances where the melt modifiers react with the polymer backbone.

Although, procedures for melt modification and hence also means for controlling the various viscosity parameters are known in the art, there is a need for improved procedures for melt modification, whereby the properties of PET and related polyesters may be improved even further.

### Summary

Accordingly, the present invention preferably seeks to mitigate, alleviate, eliminate or circumvent one or more of the above-identified deficiencies in the art and disadvantages singly or in any combination and solves at least the above mentioned problems by providing a method for altering the melt characteristics, such as the melt strength, of a polyester. The method comprises the step of melt mixing a polyester, such as PET, with:
- a tetracarboxylic dianhydride, such as pyromellitic dianhydride;
- a cross-linker and chain extender comprising at least two groups being able to react with a carboxy group and a phenolic hydroxyl group, such as 2,2'-(1,3-Phenylene)bis(4,5-dihydrooxazole); and
- a poly functional compound comprising at least two groups selected from the group consisting of non-sterically hindered phenolic hydroxyl groups,
wherein the term non-sterically hindered phenolic hydroxyl group refers to a phenolic hydroxyl group not being 2,6- disubstituted, the hydroxyl group being in position 1 of the benzene ring, with tert-butyl groups, and carboxy groups, such as 1,1,1-tris-(4-hydroxyphenyl)-ethane.

According to an aspect of the invention, the tetracarboxylic dianhydride is pyromellitic dianhydride or an aromatic tetracarboxylic dianhydride according to the general formula (I), 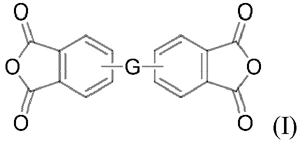
wherein "G" represents a direct bond or a di-valent group selected from the group consisting of a carbonyl group, an amide group (-C(O)NH- or -NHC(O)-), an ester group (-C(O)O- or -OC(O)-), a methylene group, a sulfone group, a sulfide group, an ether group, an -C(O)-phenylene-C(O)- group, an isopropylidene group, a hexafluoroisopropylidene group, a 3-oxyphenoxy group, a 4-oxyphenoxy group, a 4'-oxy-4-biphenoxy group, and a 4-[1-(4-oxyphenyl)-1-methylethyl]phenoxy group; and
"G" is connected to the 4- or 5-position and the 4'- or the 5'-position, respectively, in the isobenzofuran-1,3-dione residues.

According to an aspect of the invention, the cross-linker and chain extender is a compound according to any one of the general formulas (II) and (III), 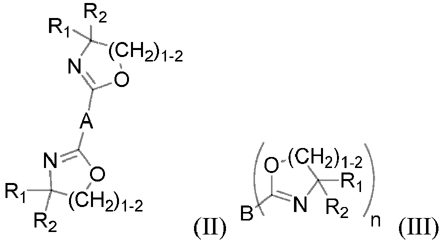 wherein
"A" is a direct bond, an arylene, such as phenylene, or a C1-12 alkylene;
R1 and R2, independently of each other, are selected from the group consisting of hydrogen and C1-5 alkyl;
"n" is an integer of 3 to 5;
"B" is a residue of an aromatic hydrocarbon, such as a benzene residue, or a C1-12 alkane residue.

Another aspect of the invention relates to a polyester with altered melt characteristics obtainable by such a method.

Another aspect of the invention relates to a method for producing an article, such as a part with complex molding geometry, a bottle, a film, a pipe, or a foam, comprising a polyester with increased resistance to plastic deformation and/or low creep properties. In such a method the melt characteristics of the polyester is altered by employing the herein above described method for altering the melt characteristics of the polyester. Subsequently, the melted polyester is shaped, such as by extrusion, injection molding, blow molding, foaming, and/or stretch-blow molding, into the article of interest.

Another aspect of the invention relates to use of a tetracarboxylic dianhydride, a cross-linker and chain extender able to react with a carboxy group and a phenolic hydroxyl group, such as a compound comprising at least two 1,3-oxazoline residues, or at least two [5,6-dihydro-4H-1,3-oxazine] residues, and poly functional compound comprising at least two groups selected from the group consisting of non-sterically hindered phenolic hydroxyl groups, wherein the term non-sterically hindered phenolic hydroxyl group refers to a phenolic hydroxyl group not being 2,6- disubstituted, the hydroxyl group being in position 1 of the benzene ring, with tert- butyl groups, and carboxy groups, such as novolac, for improving the melt characteristics, such as the melt strength, of a polyester, such as PET.

Further advantageous features of the invention are defined in the dependent claims and with regard to embodiments disclosed herein

### Description of embodiments

### Definitions

In the context of the present application and invention, the following definitions apply:
As used herein, "alkyl" used alone or as a suffix or prefix, is intended to include both branched and straight chain saturated aliphatic hydrocarbon groups having from 1 to 12 carbon atoms, or if a specified number of carbon atoms is provided then that specific number is intended. For example "C1-6 alkyl" denotes alkyl having 1, 2, 3, 4, 5 or 6 carbon atoms. When the specific number denoting the alkyl-group is the integer 0 (zero), a hydrogen-atom is intended as the substituent at the position of the alkyl-group. For example, "N(C0 alkyl)₂" is equivalent to "NH2" (amino).

As used herein, "alkylenyl" or "alkylene" used alone or as a suffix or prefix, is intended to include straight chain saturated aliphatic hydrocarbon groups having from 1 to 12 carbon atoms or if a specified number of carbon atoms is provided then that specific number is intended. For example "C1-6 alkylenyl " "C1-6 alkylene "denotes alkylenyl or alkylene having 1, 2, 3, 4, 5 or 6 carbon atoms. When the specific number denoting the alkylenyl or alkylene-group is the integer 0 (zero), a bond is intended to link the groups onto which the alkylenyl or alkylene-group is substituted. For example, "NH(C0 alkylene)NH₂" is equivalent to "NHNH₂" (hydrazino).

According to an embodiment, the groups linked by an alkylene or alkylenyl-group are intended to be attached to the first and to the last carbon of the alkylene or alkylenyl-group. In the case of methylene, the first and the last carbon is the same. For example, "H₂N(C2 alkylene)NH₂", "H₂N(C3 alkylene)NH₂", "N(C4 alkylene)", "N(C5 alkylene)" and "N(C2 alkylene)₂NH" is equivalent to 1,2-diamino ethane, 1,3-diamino propane, pyrrolidinyl, piperidinyl and piperazinyl, respectively.

Examples of alkyl include, but are not limited to, methyl, ethyl, n-propyl, i-propyl, n-butyl, i-butyl, sec-butyl, t-butyl, pentyl, and hexyl.

Examples of alkylene or alkylenyl include, but are not limited to, methylene, ethylene, propylene, and butylene.

As used herein, the term "aryl" refers to a ring structure, comprising at least one aromatic ring, made up of from 5 to 14 carbon atoms. Ring structures containing 5, 6, 7 and 8 carbon atoms would be single-ring aromatic groups, for example phenyl. Ring structures containing 8, 9, 10, 11, 12, 13, or 14 carbon atoms would be polycyclic, for example naphthyl. The aromatic ring may be substituted at one or more ring positions. The term "aryl" also includes polycyclic ring systems having two or more cyclic rings in which two or more carbons are common to two adjoining rings (the rings are "fused rings") wherein at least one of the rings is aromatic, for example, the other cyclic rings may be cycloalkyls, cycloalkenyls, cycloalkynyls, and/or aryls.

The terms ortho, meta and para apply to 1,2-, 1,3- and 1,4-disubstituted benzenes, respectively. For example, the names 1,2-dimethylbenzene and ortho-dimethylbenzene are synonymous.

As used herein, the term "arylene" refers to an aryl to which two substituents are connected.

### Embodiments

As taught by EP 2 163 577 A1, it is known within the art that a combination of PMDA (pyromellitic anhydride), PBO (1,3-phenylene-bis-oxazoline), and a sterically hindered phenol, i.e. a compound comprising a 4-hydroxy-3,5-di-*tert*-butyl-phenyl moiety, may be used to improve the properties of PET. The sterically hindered phenols are stated to be believed to act as hydrogen donor, wherein radical scavenger neutralizes the alcoxy or peroxy radicals generated by hydrolytic or thermal degradation, and does thus terminate the chain propagation of degradation processes. It also stated that, by adding sterically hindered phenols, the effectiveness of functional anhydride groups remain, therefore, intact for further upgrading reactions.

The present inventors have unexpectedly found that the addition of poly functional compounds comprising at least two non-sterically hindered phenolic hydroxyl groups rather than sterically hindered phenols, as taught be EP 2 163 577A1, improves the PET further. Further, the present inventors have also found that the non-sterically hindered phenolic hydroxyl groups may be replaced or complemented with carboxy groups.

One embodiment thus relates to a method for altering the melt characteristics, such as increasing the melt strength, of polyesters, such as aliphatic polyesters, e.g. polylactic acid (PLA), or semi aromatic polyesters, e.g. polyethylene terephthalate (PET) or polybutylene terephthalate (PBT). Such a method comprises the step of melt mixing the polyester, with:
- a tetracarboxylic dianhydride, such as PMDA (pyromellitic anhydride) or BTDA (3,3',4,4'-benzophenonetetracarboxylic dianhydride);
- a cross-linker and chain extender comprising at least two groups being able to react with a carboxy group and a phenolic hydroxyl group, such as PBO, whereby cross-linker and chain extender is able to cross-link and/or chain extend two compounds having carboxy groups; and
- a poly functional compound comprising at least two groups selected from the group consisting of non-sterically hindered phenolic hydroxyl groups,
wherein the term non-sterically hindered phenolic hydroxyl group refers to a phenolic hydroxyl group not being 2,6- disubstituted, the hydroxyl group being in position 1 of the benzene ring, with tert- butyl groups, and carboxy groups, i.e. -C(O)OH.

The melt mixing should be performed in a manner such that the various species may react with each other and thereby altering the melt characteristics by chain extending, branching, and/or cross-linking the polyester

Upon melt mixing, the tetracarboxylic dianhydride will act by acid functionalizing the polyester, i.e. by reacting with a terminal OH-group of the polyester. Further, the tetracarboxylic dianhydride may also chain extend the polyester, such as by connecting two separate polyester molecules two each other.

The cross-linker and chain extender comprising at least two groups being able to react with a carboxy group and a phenolic hydroxyl group will act as chain extender, e.g. by connecting terminal carboxy groups of two separate polyester molecules, as well as cross-linker, e.g. by connecting non-terminal pending carboxy groups of two separate polyester molecules. The molar ratio of polyester and tetracarboxylic dianhydride, will affect the number of non-terminal pending carboxy groups being present and hence also the degree of cross-linking. Further, the cross-linker and chain extender will act as water//acid scavenger, as any water in the material will result in hydrolyzed polyester generating an acid and an alcohol, these acids can be tide back to the polymers by the cross-linker and chain extender if such is present in the material.

The poly functional compounds comprising at least two groups selected from the group consisting of non-sterically hindered phenolic hydroxyl groups and carboxy groups, i.e. -C(O)OH, will act catalytically and balance the formulation. Further, the poly functional compound, in contrast to sterically hindered phenols, enables further variants of branching as they may react with the cross-linker and chain extender comprising at least two groups being able to react with a carboxy group and a phenolic hydroxyl group.

Furthermore, carboxylic acid moieties and phenols catalyze the reaction between carboxy groups and the cross-linker and chain extender comprising at least two groups being able to react with a carboxy group and a phenolic hydroxyl group. To do so they have to be at the site of reaction which is more difficult when attached to the polymer as the mobility of the catalyzing acidic functionality is much higher as a dissolved additive compared to being a part of the polymer.

The melt characteristics of various polyesters, including aliphatic polyesters, semi aromatic polyesters, and aromatic polyesters, may be altered by using the present method. Generally it is believed that chain extension will increase the viscosity component in the flow direction, while cross-linking will increase the viscosity component perpendicular to the flow direction. The melt strength of polyester may thus be increased by the present method.

As the method comprises melt mixing and as the components may be degraded at temperatures exceeding 350°C, the polyester should preferably be a polyester having a melting point of not more than 300°C. The melting point of aliphatic polyesters and semi aromatic polyesters are typically lower than melting point of aromatic polyesters. Thus, the polyester employed in the present method is typically an aliphatic polyester or a semi aromatic polyester. Specifically, the polyester employed may be a semi aromatic polyester.

Examples of aromatic polyesters, whose melt characteristic may be improved by the present method include liquid crystallize aromatic polyester with processing temperatures up to 300°C, such as Vectra marketed by Ticona.

Examples of aliphatic polyesters, whose melt characteristic may be improved by the present method, include polylactic acid (PLA), polyglycolic acid (PGA), polycaprolactone (PCL), polyethylene adipate (PEA), and polyhydroxyalkanoate (PHA), e.g. poly-3-hydroxyvalerate (PHV), poly-4-hydroxybutyrate (P4HB), and poly-3-hydroxy propionate (P3HP).

Examples of semi aromatic polyesters, whose melt characteristic may be improved by the present method include, polyethylene terephthalate (PET), polyethylene naphthalate (PEN), polypropylene terephthalate (PPT), polybutylene terephthalate (PBT), and polytrimethylene terephthalate (PTT). Further, the semi aromatic polyester may be a co-polymer of PET, PBT, or PEN.

According to an embodiment, the polyester whose melt characteristic may be improved by the present method is polyethylene terephthalate (PET). The PET may be a PET having an intrinsic viscosity (IV) of 0.4 to 2.0 dl/g. The IV may be determined in accordance with ASTM D2857-95 or ASTM D5225-09. Further, also other standardize test methods may used to determine the IV. Preferably, the PET has an IV of 0.4 to 1.0 dl/g due to the fact that an IV 2.0 represents a very high molecular weight.

The melt mixing may be performed by mixing the various components using a single or twin screw mixer, e.g. compounder extruder. Typically the polyester firstly is melted, where after the additional components, including the tetracarboxylic dianhydride, the cross-linker and chain extender comprising at least two groups being able to react with a carboxy group and a phenolic hydroxyl group, and the poly functional compound, are added. According to an embodiment, the tetracarboxylic dianhydride is added to the polyester before the cross-linker and chain extender comprising at least two groups being able to react with a carboxy group and a phenolic hydroxyl group is added.

In order to allow for reaction between the polyester and the additives to be initiated, and especially to increase the melt strength, the residence time during the melt mixing should preferably be at least 5 minutes. However, a too long residence time may result in degradation of the material. Hence, the residence time during the melt mixing should preferably not exceed 30 minutes; more preferably not exceed 15 minutes.

For most applications, the there is no need to use a residence time sufficient to complete the reactions between the various components. Rather it may be advantageous, to allow for post curing of a shaped, such as injection molded, article. For, PET-bottles being shaped by two step molding, i.e. by injection molding a pre-form followed by stretch blow molding, the reaction between the various components is typically completed during or subsequent to the stretch blow molding. In foaming applications it is however typically preferred if residence time and other parameters, are selected in a manner such that most of the increase of the melt strength is achieved during the melt mixing.

As already described, the temperature during the melt mixing should preferably no exceed 350°C. Further, the temperature during the melt mixing should be sufficient to melt all of the components in order to allow for them to react. The temperature during the melt mixing may thus be at least 250°C. Although, the temperature during the melt mixing may be up to 350°C, it preferably is 300°C or less.

If using a compounder extruder, the additives may be added via the hopper or via a side feeder. The additives may be added individually. Further, the tetracarboxylic dianhydride and the poly functional compound may be added. However, the cross-linker and chain extender comprising at least two groups being able to react with a carboxy group and a phenolic hydroxyl group should preferably be added separately from the he tetracarboxylic dianhydride and the poly functional compound, in order to avoid them reacting with each other directly. Typically, the tetracarboxylic dianhydride is added before the cross-linker and chain extender comprising at least two groups being able to react with a carboxy group and a phenolic hydroxyl group.

If a polyhydric aliphatic alcohol also should be added, it may be added either together with the cross-linker and chain extender comprising at least two groups being able to react with a carboxy group and a phenolic hydroxyl group or together with the tetracarboxylic dianhydride and the poly functional compound. Further, a polyhydric aliphatic alcohol may be added individually.

If the final part requires partial cross-linking, then it is often preferred to do so during processing, i.e. melt mixing. However, there may be cases where energy consumption and torque need to be minimized during processing and in such case it is preferred to cross-link subsequently to the melt mixing. If the final part requires full cross-linking, then it is best to allow for some level of post processing to push the material into the final cross-linked state.

Various types of tetracarboxylic dianhydrides may be used in the present method. Two examples of preferred tetracarboxylic dianhydrides for use in the present method are PMDA and BTDA.

According to an embodiment, the tetracarboxylic dianhydride may be pyromellitic dianhydride or an aromatic tetracarboxylic dianhydride according to the general formula (I), 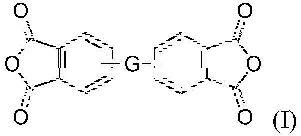 wherein "G" represents a direct bond or a di-valent group selected from the group consisting of a carbonyl group, an amide group (-C(O)NH- or -NHC(O)-), an ester group (-C(O)O- or -OC(O)-), a methylene group, a sulfone group, a sulfide group, an ether group, an -C(O)-phenylene-C(O)- group, an isopropylidene group, a hexafluoroisopropylidene group, a 3-oxyphenoxy group, a 4-oxyphenoxy group, a 4'-oxy-4-biphenoxy group, and a 4-[1-(4-oxyphenyl)-1-methylethyl]phenoxy group; and wherein "G" may be connected to the 4- or 5-position and the 4'- or the 5'-position, respectively, in the isobenzofuran-1,3-dione residues. Symmetric aromatic dianhydrides as well asymmetric aromatic dianhydrides are equally possible. Preferred examples of the aromatic dianhydrides according to such an embodiment comprise pyromellitic dianhydride, 4,4'-oxydiphthalic anhydride, 2,2-bis-[4-(3,4-dicarboxyphenoxy)phenyl]-propane dianhydride, 3,3',4,4'-benzophenonetetracarboxylic acid dianhydride, 3,3',4,4'-tetracarboxybiphenyl dianhydride, 4,4',5,5'-sulfonyldiphthalic anhydride, and 5,5'-(perfluoropropane-2,2-diyl)bis(isobenzofuran-1,3-dione).

According to an embodiment, the tetracarboxylic dianhydride may be tetrahydrobenzo[1,2-c:4,5-c']difuran-1,3,5,7(3aH,7aH)-tetraone or a hydrogenated non-aromatic derivative of the aromatic tetracarboxylic dianhydride according to the general formula (I). Examples hydrogenated non-aromatic derivative of the aromatic tetracarboxylic dianhydride according to the general formula (I) comprises

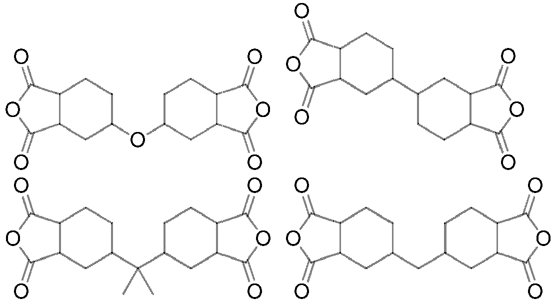

Furthermore, in order to affect the ratio cross-linking and chain extension, part of the tetracarboxylic dianhydride used, may be a replaced with trimellitic anhydride (1,3-dihydro-1,3-dioxo-5-isobenzofurancarboxylic acid; Trimellitic anhydride (TMA)). Replacing the tetracarboxylic dianhydride , such as PMDA or BTDA, with TMA will increase the degree of cross-linking.

By employing a cross-linker and chain extender comprising at least two groups being able to react with a carboxy group and a phenolic hydroxyl group, additional chain extension as well as cross-linking of the polyester may be achieved. A typical example of cross-linker and chain extender to be employed in the present method is a compound comprising at least two 1,3-oxazoline residues, e.g. 2,2'-(1,3-Phenylene)bis(4,5-dihydrooxazole) also known as 1,3-phenylene-bis-oxazoline (PBO), or a compound comprising at least two [5,6-dihydro-4H-1,3-oxazine] residues, e.g. 1,4-bis(5,6-dihydro-4H-1,3-oxazin-2-yl)benzene. A further example of a cross-linker and chain extender to be employed in the present method is a polyepoxide, such as a diexpoxide, a triepoxide, a tetraepoxide, etc., a polyepoxy polymer. Examples of polyepoxides comprises biphenol or bisphenol based epoxies, e.g. bisphenol A and F based epoxides, cycloaliphatic epoxides, diglycidyl glycidyloxyaniline, trimethylolpropane triglycidyl ether, pentaerythritol tetraglycidyl ether, tetraglycidyl methylenedianiline. An example of a polyepoxy polymer useful in this context is novolac based epoxy resin. Further, also a Joncryl polyepoxy resin, i.e. a epoxy resin based on a styren, methacrylic acid backbone, such as Joncryl ADR-4370F, is an example of a polyepoxy polymer. According to an embodiment, the cross-linker and chain extender comprising at least two groups being able to react with a carboxy group and a phenolic hydroxyl group is a polyepoxide.

According to an embodiment, the cross-linker and chain extender is a compound according to one of the general formulas (II) and (III), 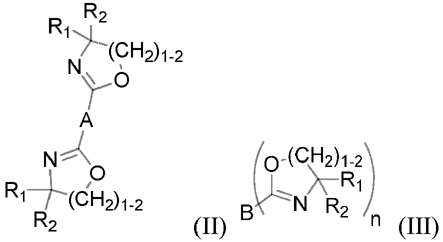 wherein
"A" is a direct bond, an arylene, such as phenylene, or a C1-12 alkylene;
R1 and R2, independently of each other, are selected from the group consisting of hydrogen and C1-5 alkyl;
"n" is an integer of 3 to 5;
"B" is a residue of an aromatic hydrocarbon, such as a benzene residue, or a C1-12 alkane residue.

The various 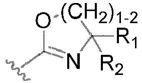 groups of formula (III) may be connected to any substitutable carbon atom of the residue of the aromatic hydrocarbon or the alkane residue.

Use of a cross-linker and chain extender according to formula (III) will result in branching in addition to chain-extension and cross-linking.

Long-chain branching effect the polymer processability, since it affects the melt viscosity, temperature dependence of viscosity, melt elasticity, shear thinning, and extension thickening. The effect of the branching on the melt-state properties of the polymer depends on the length and the distribution of the branches, and the molecular weight and the molecular weight distribution.. Introduction of long-chain branching renders it to tailor-make and control the flow behavior, such as die swell in an extrusion or injection molding process

Further, the cross-linker and chain extender may be a oligomer or polymer obtainable by co-polymerization of 2-vinyl-4,5-dihydrooxazole, i.e. 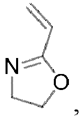 or 2-(prop-1-en-2-yl)-4,5-dihydrooxazole, i.e. 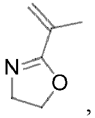 and a co-monomer selected from the group consisting of ethene, propene, styrene, vinyl acetate, alkyl acrylate, such as butyl acrylate, alkyl methacrylate, such as methyl methacrylate, acrylonitrile, vinylchloride. As an example of such an oligomeric or polymeric cross-linker and chain extender, polymers of the Epocros^{®} series marketed by Nippon Shokubai, may be mentioned.

Preferably, the cross-linker and chain extender is selected from the group consisting of: 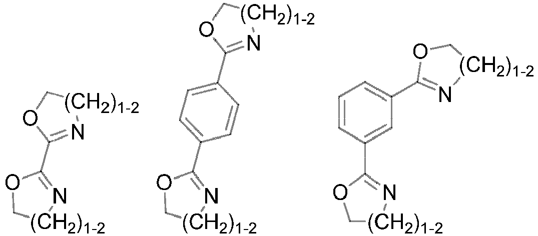 and polymers of the Epocros^{®} series marketed by Nippon Shokubai.

As already mention, the cross-linker and chain extender may also be a polyepoxide, such as Joncryl ADR-4370F. Furthermore, it may be advantageous to use a combination of a chain extender comprising at least two 1,3-oxazoline residues or at least two [5,6-dihydro-4H-1,3-oxazine] residues, such as a cross-linker and chain extender according formula (II) or (III), e.g. PBO, and polyepoxide as synergistic effects may be achieved.

By employing a poly functional compound comprising at least two groups selected from the group consisting of non-sterically hindered phenolic hydroxyl groups, and a carboxy group, i.e. -C(O)OH, the poly functional compound, in addition to acting catalytically, as compound comprising sterically hindered phenolic hydroxyl groups will do, also may react with the other additives of the modified polyester.

According to the invention, the term non-sterically hindered phenolic hydroxyl group, as used herein, refers to a phenolic hydroxyl group not being 2,6-disubstituted, the hydroxyl group being in position 1 of the benzene ring , with *tert-*butyl groups. Preferably, non-sterically hindered phenolic hydroxyl group, as used herein, refers to a phenolic hydroxyl group not being 2,6-disubstituted, the hydroxyl group being in position 1 of the benzene ring , with bulky alkyl groups, such as a *tert-*butyl group, an iso-propyl group, a *sec*-butyl group, or a neopentyl group.

Preferably, the *orto*-positions, i.e. position 2 and 6, the hydroxyl group being in position 1 of the aromatic ring, next to the non-sterically hindered phenolic hydroxyl group are unsubstituted or substituted with a benzyl group, which benzyl group may be further substituted.

A typical example of a poly functional compound comprising at least two, and typically more than two, non-sterically hindered phenolic hydroxyl groups are phenolic resins, such as phenol formaldehydes resins, e.g. novolac, comprising at least two un-reacted non-sterically hindered phenolic hydroxyl groups. The phenolic resins should preferably comprise at least two moieties selected from the group consisting of hydroxyphenyl, e.g. 4-hydroxyphenyl, and hydroxyphenylene, e.g. 2-hydroxy-1,5-phenylene or 2-hydroxy-1,3-phenylene.

In order to allow for drying of a novolac, the melting point of the novolac should preferably be at least 60°C, such as at least 70°C, if a novolac is being used. According to an embodiment, the poly functional compound is a novolac.

Another example of a poly functional compounds comprising at least two, and typically more than two, non-sterically hindered phenolic hydroxyl groups and/or carboxy groups, are compounds comprising at least two p-hydroxyphenyl groups and/or carboxy groups. Use of a poly functional compound comprising at least three non-sterically hindered phenolic hydroxyl groups and/or carboxy groups provides means for branching the polyester, which may be advantageous if the cross-linker and chain extender is di-functional.

According to an embodiment, the poly functional compound comprising at least two, and typically more than two, non-sterically hindered phenolic hydroxyl groups and/or carboxy groups, is a compound selected from the group presented below:

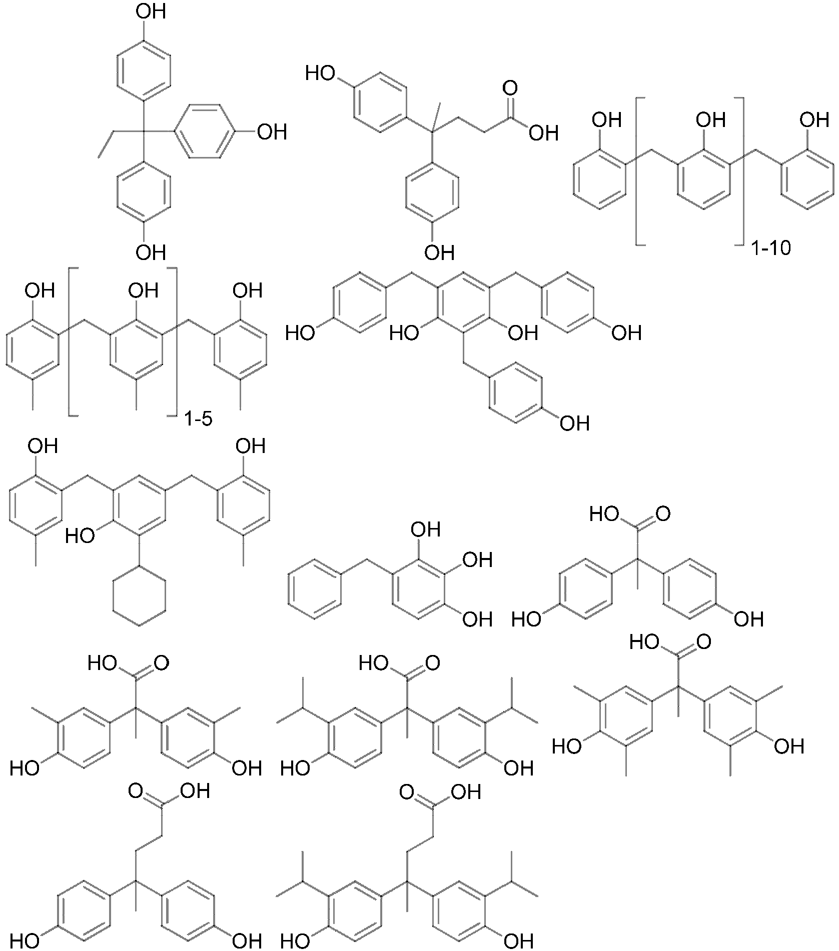

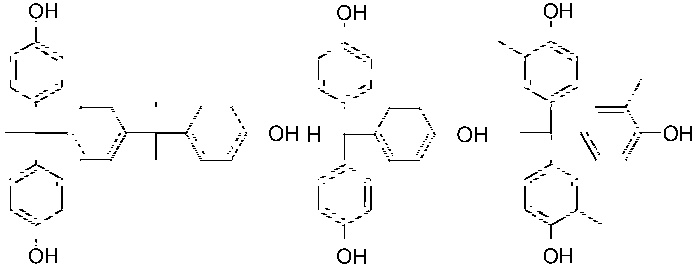

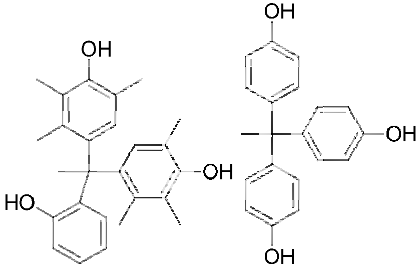

According to an embodiment, the poly functional compound comprising at least two, and typically more than two, non-sterically hindered phenolic hydroxyl groups and/or carboxy groups, is a compound selected from the group presented below:

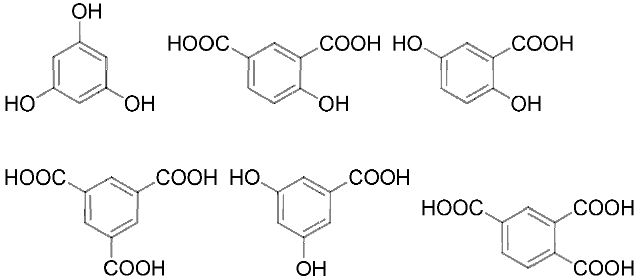

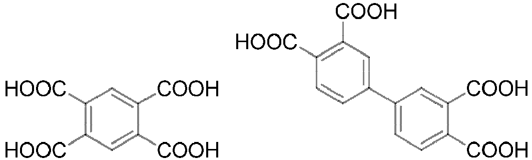

Further examples of poly functional compounds comprising two, non-sterically hindered phenolic hydroxyl groups comprises various di-phenols, such as bis-phenols, e.g. bis-phenol A, 1,1-Bis(4-hydroxyphenyl)-1-phenyl-ethane, 2,2-Bis(4-hydroxyphenyl)hexafluoropropane, 2,2-Bis(4-hydroxyphenyl)butane, 1,1-Bis(4-hydroxyphenyl)ethane, Bis(4-hydroxydiphenyl)methane, 1,3-Bis(2-(4-hydroxyphenyl)-2-propyl)benzene, and 1,4-Bis(2-(4-hydroxyphenyl)-2-propyl)benzene. If the poly functional compound is a di-functional compound, such as bis-phenol, the cross-linker and chain extender should preferably be at least tri-functional.

According to an embodiment, the poly functional compound is a compound according to formula (IV) 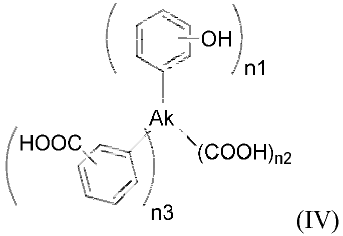 wherein
"n1" is an integer of 0 (zero) to 10, such as 1 to 5;
"n2" is an integer of 0 (zero) to 10, such as 0 (zero) to 5;
"n3" is an integer of 0 (zero) to 10, such as 0 (zero) to 5;
the sum of "n1", "n2", and "n3" is at least 2, and preferably at least 3; and
"Ak" represents a straight or branched alkane residue comprising 1 to 12 carbon atoms, such as 1 to 6 carbon atoms.

The various substituents of formula (IV) are connected to the same carbon atom of the straight or branched alkane residue or to separate carbon atoms of the straight or branched alkane residue. Preferably, the hydroxyfenyl group of formula (IV), is a 4-hydroxyfenyl group.

The PET may also be further improved by addition of polyhydric aliphatic alcohols comprising at least three hydroxyl groups, such as pentaerythritol having four hydroxyl groups. As described in EP 0 956 313, the ratio of aliphatic hydroxyl group:tetracarboxylic dianhydride may be from 1:8 to 1:32, such as about 1:32.

When using a carboxylic dianhydride to chain extend a polyester, the acid functionality is doubled for each pair of chains which are connected to the dianhydride. Further, the addition of the poly functional compound comprising at least two groups selected from the group consisting of non-sterically hindered phenolic hydroxyl groups, and a carboxy group, i.e. -C(O)OH, add a specific amount of acid functional groups (-C(O)OH and Ar-OH), but also changes the average acid functionality of the system.

Combining the two above statements on a molar basis makes it possible to predict, or at least estimate, the average acid functionality of the entire system, based on the molar amount of carboxylic dianhydride and poly functional compound to be added.

The cross-linker and chain extender is then preferably balanced to the number of available acid functionalities. If the cross-linker and chain extender is di-functional, such as PBO is, and is reacted with acid functionalities, i.e. -C(O)OH and phenolic hydroxyl groups, of the system corresponding to less than two, two reactions per chain, then chain extension may occur, if the number of reaction that can take place is above two, cross-linking will start to occur, and if the number of reaction that can take place is above three the material will be fully cross-linked.

Applying the above strategy in a specific example, the following formulation can be devised:

| | |
|---|---|
| PET (Mn 15000, CEG<20 mmol/kg) | 1 mol |
| PMDA (2 functional) | 0.75 mol |
| 1,1,1-tris-(4-hydroxyphenyl)-ethane (3 functional) | 0.5 mol |

Such a combination provides an average acid functionality of approx. 3.5 and the number of available acidic groups is approx. 0.434 mol. PBO, being a di-functional cross-linker and chain extender, may then be added in amount up to 0.217 mol. Using more than 0.217 mol will theoretical result in overdosing of PBO. As PBO typically is the most expensive component, overdosing is typically to be avoided.

Using between 0 and 30 % of maximum amount of PBO, i.e. 0.217 mol, will provide a low level branching and chain extension; using between 30 and 60 % of maximum amount of PBO, i.e. 0.217 mol, will provide a high level of branching and chain extension; using between 60 and 80 % of maximum amount of PBO, i.e. 0.217 mol, will provide a low level of cross-linking; and using between 80 and 100 % of maximum amount of PBO, i.e. 0.217 mol, will provide a high level of cross-linking.

The ratio of branching, chain extension, and cross-linking may be varied by varying the relative amount of the various components as well as by varying the functionality of the component. In general, a component having a functionality of more than two will contribute to branching.

According to an embodiment the following molar amounts, with respect to the polyester of the various components may be used:
- carboxylic dianhydride 1 to 100 mol%, such as 25 to 75 mol%
- cross-linker and chain extender 1 to 100 mol%, such as 5 to 40 mol%
- poly functional compound 1 to 100 mol%, such as 10 to 50 mol%

According to an embodiment, also blowing agent, such as carbon dioxide, nitrogen, alcohols, ketons, methyl formate, hydrofluorocarbon a hydrocarbon, e.g. n-hexane, iso- or n-pentane, cyclopentane and n-heptane, or a gas mixture thereof, an expanding agent, a foaming agent, nucleating agent, such as talc, kaolin, silica gel, and TiO₂, a flame retardant, such as a halogenated, charforming (like phosphorus-containing) or water-releasing compound, a plasticizer, a lubricant, such as an ester of a fatty acid, an impact modifier, insulation modifier, a pigment, a filler, an antioxidant, a UV-stabilizer and/or a color improver is melt mixed with the polyester

Fillers are typically used for increasing dimension stability even though a few other mechanical properties, such as density, rigidity and acoustic properties may be altered by means of fillers. Fillers may be organic, like cellulose, or inorganic, such as minerals like for instance mica, lime and talcum

Subsequently to the melt mixing, the improved polyester, may be molded, such as injection molded, blow molded, or injection molded followed by stretch-blow molding. Articles, such as parts with complex molding geometries, e.g. mechanical parts, including gears, bottles, e.g. PET-bottles, films, pipes, and foams, produced by use of improved polyester will typically display improved mechanical properties, such as decreased plastic deformation, increased chemical resistance, increased barrier properties, and/or increased tracking resistance and surface resitivity. In US 5,597,525, various aspects of injection molding of polyethylene terephthalate is disclosed. Further, the improved polyester may be foamed subsequently to the melt mixing.

An embodiment thus relates to a method for producing an article comprising a polyester with increased resistance to plastic deformation and/or low creep properties. Such a method comprises the steps of:
- altering the melt characteristics of said polyester be employing the method disclosed herein; and
- shaping said melted polyester into an article.

The shaping may be performed by extrusion, injection molding, blow molding, foaming, and/or stretch-blow molding. Examples of articles that may be produced by such a method includes parts with complex molding geometries, e.g. mechanical parts, including gears, bottles, PET-bottles, films, pipes, and foams.

Articles obtained by such a method will display improved mechanical properties, such as resistance to plastic deformation and/or low creep properties. An embodiment accordingly relates to an article obtainable by such method.

As described herein, melt mixing of a polyester with an tetracarboxylic dianhydride, a cross-linker and chain extender comprising at least two groups being able to react with a carboxy group and a phenolic hydroxyl group, and a poly functional compound comprising at least two groups selected from the group consisting of non-sterically hindered phenolic hydroxyl groups, and carboxy groups, improves the melt characteristics, such as the melt strength, of polyesters.

Hence, a further embodiment relates to the use of a tetracarboxylic dianhydrides, such as PMDA or BTDA, a cross-linker and chain extender able to react with a carboxy group and a phenolic hydroxyl group, such as a compound comprising at least two 1,3-oxazoline residues, e.g. 2,2'-(1,3-Phenylene)bis(4,5-dihydrooxazole) also known as 1,3-phenylene-bis-oxazoline (PBO), or at least two [5,6-dihydro-4H-1,3-oxazine] residues, and poly functional compound comprising at least two groups selected from the group consisting of non-sterically hindered phenolic hydroxyl groups, wherein the term non-sterically hindered phenolic hydroxyl group refers to a phenolic hydroxyl group not being 2,6- disubstituted, the hydroxyl group being in position 1 of the benzene ring, with tert- butyl groups, and carboxy groups for improving the melt characteristics, such as the melt strength, of PET. Various aspects of such use have already been described herein in relation to the corresponding method.

An embodiment relates to use of:
- 0.01 to 5 wt%, such as 0.01 to 1 wt% or 0.01 to 0.5 wt%, with respect to PET of a tetracarboxylic dianhydride, such as PMDA or BTDA;
- 0.01 to 10 wt%, such as 0.01 to 5 wt% or 0.01 to 0.5 wt%, with respect to PET of a chain extender able to react with a carboxy group and a phenolic hydroxyl group, such as a compound comprising at least two 1,3-oxazoline residues, e.g. 2,2'-(l,3-Phenylene)bis(4,5-dihydrooxazole) also known as 1,3-phenylene-bis-oxazoline (PBO), or at least two [5,6-dihydro-4H-1,3-oxazine] residues;
- 0.01 to 10 wt%, such as 0.01 to 5 wt% or 0.01 to 0.5 wt%, with respect to PET of a phenolic resin, such as a phenol formaldehyde resin, e.g. novolac, comprising at least two un-reacted none sterically hindered phenolic OH groups;
wherein the term non-sterically hindered phenolic hydroxyl group refers to a phenolic hydroxyl group not being 2,6- disubstituted, the hydroxyl group being in position 1 of the benzene ring, with tert-butyl groups;
- optionally 0.01 to 10 wt%, such as 0.01 to 5 wt% or 0.01 to 0.5 wt%, with respect to PET of a polyepoxy polymer, such as Joncryl ADR-4370F; and
- optionally 0.01 to 5 wt%, such as 0.01 to 0.5 wt% or 0.01 to 0.2 wt%, with respect to PET of a polyhydric aliphatic alcohol comprising at least three hydroxyl group, such as pentaerythritol;
for improving the melt characteristics, such as the melt strength, of PET. The amount of PET in such an embodiment may be at least 90 wt%, such as at least 95 wt%, 97 or 99 wt%, PET is used.

Without further elaboration, it is believed that one skilled in the art may, using the preceding description, utilise the present invention to its fullest extent. The following preferred specific embodiments are, therefore, to be construed as merely illustrative and not limitative of the remainder of the disclosure in any way whatsoever.

Although the present invention has been described above with reference to (a) specific embodiment(s), it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc do not preclude a plurality.

### Examples

The following examples are mere examples and should by no mean be interpreted to limit the scope of the invention. Rather, the invention is limited only by the accompanying claims.

### Example 1

In order to evaluate various formulations for their ability to improve the properties of PET, PET (Polyester 1101 provided by Invista) was added at the feeding entry of a Brabender Plasticorder at 250°C and at 50 rpm mixing speed. Subsequently to melting of the polymer (approx. 2-3 minutes from the addition) the formulation to be tested (formulation 1 and 2, according to table 1 and 2 below) was added to the melt and after additional 2-3 minutes the mixing and heating was stopped. The melt was taken out from the Brabender and allowed to cool down to room temperature.

The melt rheology of the solid material was tested using a TA-Instruments Ares G2 for Plate-Plate Rheology (Frequency sweep: Isothermal 270 dC, 0.1 rad/s à 1000 rad/s, and Strain 1%, and Strain sweep: Isothermal 270 dC, 1 rad/s, Strain 0.1% à 250%, respectively). The results are outlined in table 3 below.

**Table 1 - Formulation 1**

| **Chemicals** | **Amount (wt.%)** |
|---|---|
| PET | 99.15 |
| Joncryl ADR-4370F | 0.15 |
| PBO | 0.15 |
| Novolac | 0.10 |
| BTDA | 0.40 |
| Penta | 0.05 |

**Table 2 - Formulation 2**

| **Chemicals** | **Amount (wt.%)** |
|---|---|
| PET | 99.6 |
| Joncryl ADR-4370F | 0.08 |
| PBO | 0.08 |
| Novolac | 0.05 |
| BTDA | 0.20 |
| Penta | 0.03 |

| | |
|---|---|
| PET = Polyethylene terephthalate; PBO = 1,3-Phenylene-bis-oxazoline;BTDA = 3.3'.4.4'-Benzophenone Tetracarboxylic DiAnhydride: Penta = Pentaerythritol | |

The Novolac used was a sample of Prefere 82 4439X DP116 hexafree obtained from Dynea and the Joncryl ADR-4370F was obtained from BASF. The other chemicals were also obtained from commercial suppliers.

**Table 3 - Plate-plate rheology measurement at 1% strain and 1 rad/s at 270 deg C.**

| **Formulation** | **Complex viscosity (Pa s)** | **Tan (delta)** |
|---|---|---|
| Ref* | 590 | 7 |
| 1 | 2700 | 3 |
| 2 | 730 | 8 |

| | | |
|---|---|---|
| *Ref = Neat PET without any additives | | |

As apparent from Table 3, the tested formulation 1 and 2 resulted in improved melt rheology compared to the reference sample (PET without any additive) even at levels as low as one third of the weight added. It is also apparent that the plastic and elastic components of the materials are changed.

### Example 2

In order to verify the ability to improve the melt strength of PET, formulations as described herein were compared to formulations known in the art, such as formulations according to EP 2 163 577.

PET and additive(s) (cf. tables 5 to 7 below) were compounded on a Brabender KETSE 20/40 D EC co-rotating, intermeshing twin-screw extruder with vacuum venting of the barrel. The screw diameter was D=20mm, and the screw length was L=40D. A standard screw configuration with conveying, kneading and mixing screw elements was used. The extruder was operated at a polymer feed rate of 1740 g/h 75 rpm and the temperature profile in the extruder is shown in Table 4.

**Table 4 - temperature profile in the extruder**

| **Zone** | **Temperature** |
|---|---|
| 1 (feed) | 290 |
| 2 | 280 |
| 3 | 275 |
| 4 | 270 |
| 5 | 265 |
| 6 (die) | 265 |

The polymer and masterbatch additive, i.e. PMDA in polyethylene (PE) were fed at the main feed using a volumetric feeder and the other additives were added using a volumetric side feeder which was located 12 D downstream from the main feed. The torque on the screw shafts and the pressure at the die were monitored continuously.

**Table 5 - Formulation 3 (reference)**

| **Compound** | **Amount** |
|---|---|
| Polyester (PET) | 99.2 wt% |
| Dianhydride (PMDA)* | 0.8 wt% |
| Dioxazoline | 0 wt% |
| Polyphenolic compound | 0 wt% |

| | |
|---|---|
| *PMDA master batch approx 30 wt% in PE | |

**Table 6 - Formulation 4 (reference; EP 2 163 577)**

| **Compound** | **Amount** |
|---|---|
| Polyester (PET) | 97.6 wt% |
| Dianhydride (PMDA)* | 0.8 wt% |
| Dioxazoline (PBO) | 0.8 wt% |
| Sterically hindered polyphenolic compound (Irganox 1330) | 0.8 wt% |

| | |
|---|---|
| *PMDA master batch approx 30 wt% in PE | |

**Table 7 - Formulation 5**

| **Compound** | **Amount** |
|---|---|
| Polyester (PET) | 97.5% |
| Dianhydride (PMDA)* | 0.8% |
| Dioxazoline (PBO) | 1.2% |
| Non-sterically hindered Polyphenolic compound (Tris)* | 0.5% |

| | |
|---|---|
| * PMDA master batch approx 30 wt% in PE, TRIS=1,1,1-tris-(4-hydroxyphenyl)-ethane | |

**Table 8 - Plate-plate rheology measurement at 1% strain and 1 rad/s at 270 deg C.**

| **Formulation** | **Complex viscosity (Pa s)** | **Tan (delta)** |
|---|---|---|
| Neat PET without any additives | 680 | 68 |
| Formulation 3 | 1200 | 17 |
| Formulation 4* | 2250 | 4 |
| Formulation 5* | 3050 | 2.5 |

| | | |
|---|---|---|
| *after 35 min in the rheometer | | |

As apparent from Table 8, the tested formulation 3, 4 and 5 resulted in improved melt rheology compared to the reference sample (PET without any additive). Further, formulation 5 is by far the most effective in improving the melt rheology of PET. It is also apparent that the plastic and elastic components of the materials are changed.

**Table 9 - Plate-plate rheology measurement at 1% strain and 1 rad/s at 270 deg C**

| | **Complex viscosity (Pa s)** | | | |
|---|---|---|---|---|
| **Formulation** | **5 min** | **20 min** | **35 min** | **50 min** |
| Formulation 4 | 2300 | 2250 | 2250 | ND |
| Formulation 5 | 2100 | 2500 | 3050 | 3300 |

As apparent from Table 8 and 9, both formulation 4 and 5 (cf. result for formulation 3 in table 8), have a catalytic effect on the chain extension of PMDA using PBO. However, in contrast to formulation 4, formulation 5 is also able to further improve the polyester, thus confirming that use of a poly functional compound comprising at least two groups selected from the group consisting of non-sterically hindered phenolic hydroxyl groups, and carboxy groups, rather than a sterically hindered phenol improves the polyester further.

## Claims

1. A method for altering the melt characteristics of a polyester, the method comprising the step of melt mixing said polyester, with:
- a tetracarboxylic dianhydride;
- a cross-linker and chain extender comprising at least two groups being able to react with a carboxy group and a phenolic hydroxyl group; and
- a poly functional compound comprising at least two groups selected from the group consisting of non-sterically hindered phenolic hydroxyl groups, wherein the term non-sterically hindered phenolic hydroxyl group refers to a phenolic hydroxyl group not being 2,6-disubstituted, the hydroxyl group being in position 1 of the benzene ring, with *tert*-butyl groups, and carboxy groups.

2. The method according to claim 1, wherein the polyester is an aliphatic polyester or a semi aromatic polyester, preferably said polyester is as a semi aromatic polyester.

3. The method according to claim 2, wherein the polyester is polyethylene terephthalate (PET), such as a polyethylene terephthalate (PET) having an intrinsic viscosity according to ASTM D2857-95 of 0.4 to 1.0 dl/g, or an intrinsic viscosity according to ASTM D5225-09 of 0.4 to 1.0 dl/g.

4. The method according to any one of the claims 1 to 3, wherein the polyester firstly is melted, where after the tetracarboxylic dianhydride, the cross-linker and chain extender comprising at least two groups being able to react with a carboxy group and a phenolic hydroxyl group, and the poly functional compound are added; and/or
wherein the tetracarboxylic dianhydride is added to the polyester before the cross-linker and chain extender comprising at least two groups being able to react with a carboxy group and a phenolic hydroxyl group is added.

5. The method according to any one of the claims 1 to 4, wherein the residence time during the melt mixing is between 5 and 30 minutes, such as between 5 and 15 minutes and, wherein the temperature during the melt mixing is between 250°C and 350°C, such as between 250°C and 300°C.

6. The method according to any one of the claims 1 to 7, wherein said tetracarboxylic dianhydride is pyromellitic dianhydride or an aromatic tetracarboxylic dianhydride according to the general formula (I), 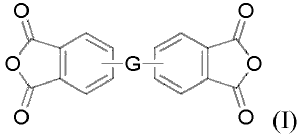 wherein "G" represents a direct bond or a di-valent group selected from the group consisting of a carbonyl group, an amide group (-C(O)NH- or -NHC(O)-), an ester group (-C(O)O- or -OC(O)-), a methylene group, a sulfone group, a sulfide group, an ether group, an -C(O)-phenylene-C(O)- group, an isopropylidene group, a hexafluoroisopropylidene group, a 3-oxyphenoxy group, a 4-oxyphenoxy group, a 4'-oxy-4-biphenoxy group, and a 4-[1-(4-oxyphenyl)-1-methylethyl]phenoxy group; and
"G" is connected to the 4- or 5-position and the 4'- or the 5'-position, respectively, in the isobenzofuran-1,3-dione residues; preferably said tetracarboxylic dianhydride is selected from the group consisting of pyromellitic dianhydride, 4,4'-oxydiphthalic anhydride, 2,2-bis-[4-(3,4-dicarboxyphenoxy)phenyl]-propane dianhydride, 3,3',4,4'-benzophenonetetracarboxylic acid dianhydride, 3,3',4,4'-tetracarboxybiphenyl dianhydride, 4,4',5,5'-sulfonyldiphthalic anhydride, and 5,5'-(perfluoropropane-2,2-diyl)bis(isobenzofuran-1,3-dione).

7. The method according to any one of the claims 1 to 6, wherein said cross-linker and chain extender comprising at least two groups being able to react with a carboxy group and a phenolic hydroxyl group is:
- a compound according to any one of the general formulas (II) and (III), 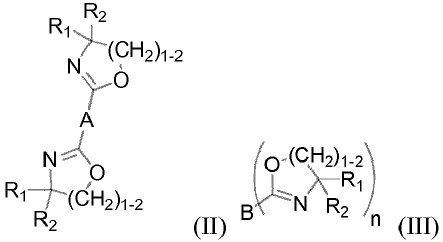 wherein
"A" is a direct bond, an arylene, such as phenylene, or a C1-12 alkylene;
R1 and R2, independently of each other, are selected from the group consisting of hydrogen and C1-5 alkyl;
"n" is an integer of 3 to 5;
"B" is a residue of an aromatic hydrocarbon, such as a benzene residue, or a C1-12 alkane residue; such as a compound selected from the group consisting of: 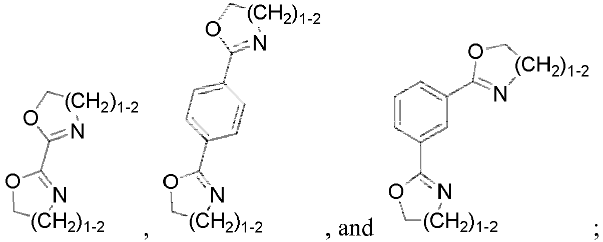
- an oligomer or polymer obtainable by co-polymerization of 2-vinyl-4,5-dihydrooxazole, or 2-(prop-1-en-2-yl)-4,5-dihydrooxazole, and a co-monomer selected from the group consisting of ethene, propene, styrene, vinyl acetate, alkyl acrylate, alkyl methacrylate, acrylonitrile, and vinylchloride; or
- a polyepoxide, such as a polyepoxide selected from the group consisting of bisphenol A and F based epoxides, cycloaliphatic epoxides, novolac based epoxy resins, diglycidyl glycidyloxyaniline, trimethylolpropane triglycidyl ether, pentaerythritol tetraglycidyl ether, and tetraglycidyl methylenedianiline.

8. The method according to any one of the claims 1 to 7, wherein said poly functional compound comprises at least one, preferably at least two, non-sterically hindered phenolic hydroxyl groups.

9. The method according to any one of the claims 1 to 8, wherein said poly functional compound is:
- a phenolic resin, such as a novolac;
- a compound according to formula (IV) 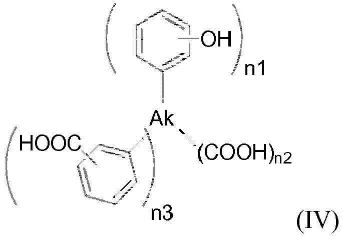 wherein
"n1" is an integer of 0 (zero) to 10, such as 1 to 5;
"n2" is an integer of 0 (zero) to 10, such as 0 (zero) to 5;
"n3" is an integer of 0 (zero) to 10, such as 0 (zero) to 5;
the sum of "n1", "n2", and "n3" is at least 2, and preferably at least 3; and
"Ak" represents a straight or branched alkane residue comprising 1 to 12 carbon atoms, such as 1 to 6 carbon atoms;
- selected from the group consisting of: 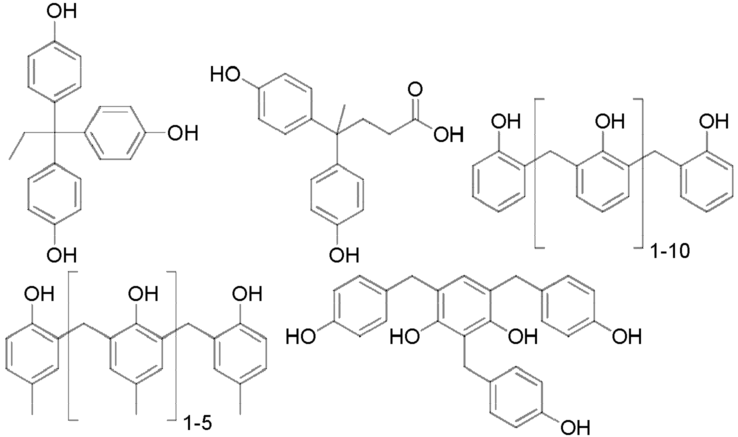 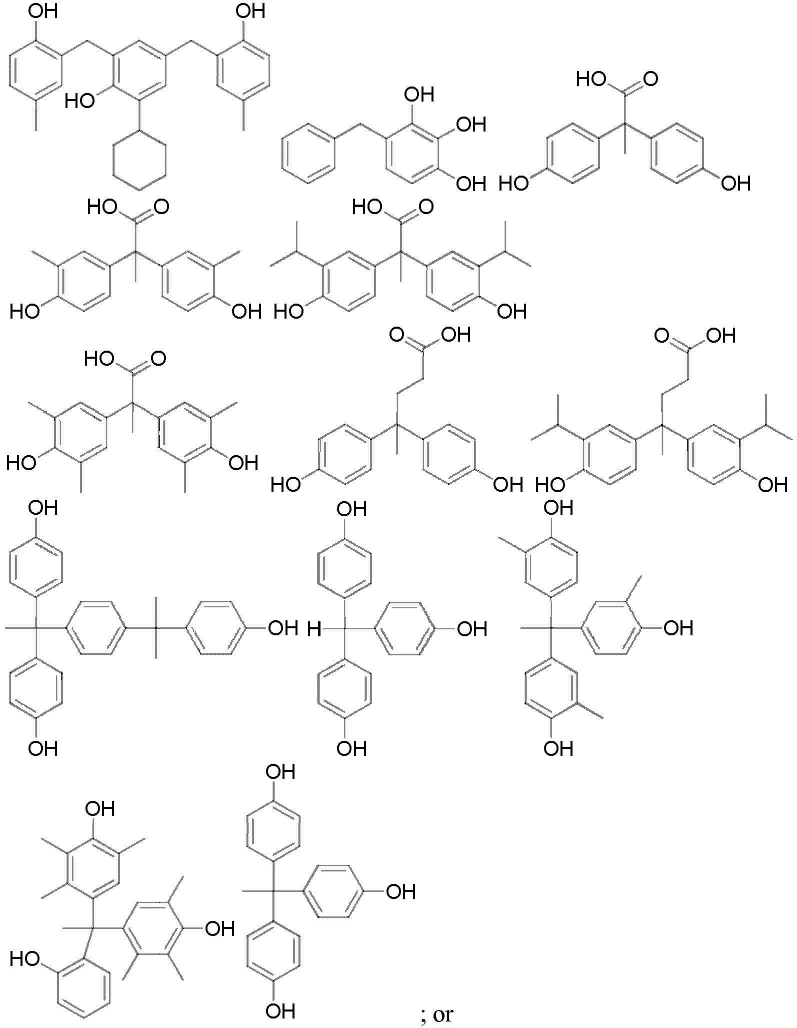 selected from the group consisting of:

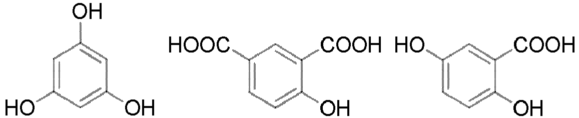

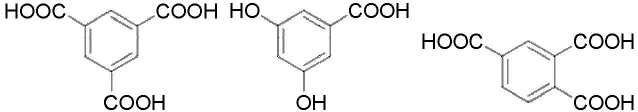

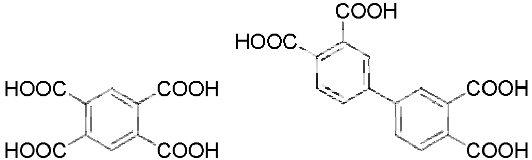

10. The method according to any one of the claims 1 to 9, wherein said poly functional compound comprises at least two, preferably at least three, p-hydroxyphenyl groups and/or carboxy groups.

11. The method according to any one of the claims 1 to 10, wherein also a polyhydric aliphatic alcohols comprising at least three hydroxyl groups is melt mixed with the polyester; and/or
wherein also a blowing agent, an expanding agent, a foaming agent, , a plasticizer, a lubricant, an impact modifier, insulation modifier, a pigment, a filler, an antioxidant, a UV-stabilizer and/or a color improver is melt mixed with the polyester.

12. A polyester with altered melt characteristics obtainable by the method according to any one of the claims 1 to 11.

13. Method for producing an article comprising a polyester with increased resistance to plastic deformation and/or low creep properties comprising the steps of:
- altering the melt characteristics of said polyester be employing the method according to any one of the claims 1 to 12; and
- shaping said melted polyester into an article, such as a bottle, a film, a pipe, or a foam.

14. The method according to claim 13, wherein said shaping is performed by extrusion, injection molding, blow molding, foaming, and/or stretch-blow molding.

15. An article obtainable by the method according to any one of the claims 13 or 14.

16. Use of a tetracarboxylic dianhydride, a cross-linker and chain extender able to react with a carboxy group and a phenolic hydroxyl group, and poly functional compound comprising at least two groups selected from the group consisting of non-sterically hindered phenolic hydroxyl groups, wherein the term non-sterically hindered phenolic hydroxyl group, refers to a phenolic hydroxyl group not being 2,6-disubstituted, the hydroxyl group being in position 1 of the benzene ring, with *tert-*butyl groups, and carboxy groups, for improving the melt characteristics, such as the melt strength, of a polyester, such as PET.

17. The use according to claim 16, wherein
said cross-linker and chain extender is a compound comprising at least two 1,3-oxazoline residues, or at least two [5,6-dihydro-4H-1,3-oxazine] residues;
said poly functional compound is a novolac;
also a polyepoxy polymer, such as Joncryl ADR-4370F, is used to improve the melt characteristics of the polyester; and/or
also a polyhydric aliphatic alcohol having at least three hydroxyl group, such as pentaerythritol, is used to improve the melt characteristics of the polyester.

18. Use of:
- 0.01 to 5 wt%, such as 0.01 to 1 wt% or 0.01 to 0.5 wt%, with respect to PET of a tetracarboxylic dianhydride, such as PMDA or BTDA;
- 0.01 to 10 wt%, such as 0.01 to 5 wt% or 0.01 to 0.5 wt%, with respect to PET of a cross linker and chain extender able to react with a carboxy group and a phenolic hydroxyl group, such as a compound comprising at least two 1,3-oxazoline residues, e.g. 2,2'-(1,3-Phenylene)bis(4,5-dihydrooxazole) also known as 1,3-phenylene-bis-oxazoline (PBO), or at least two [5,6-dihydro-4H-1,3-oxazine] residues;
- 0.01 to 10 wt%, such as 0.01 to 5 wt% or 0.01 to 0.5 wt%, with respect to PET, of a phenolic resin, such as a phenol formaldehyde resin, e.g. novolac, comprising at least two un-reacted none sterically hindered phenolic hydroxyl groups, wherein the term non-sterically hindered phenolic hydroxyl group, refers to a phenolic hydroxyl group not being 2,6-disubstituted, the hydroxyl group being in position 1 of the benzene ring, with *tert*-butyl groups;
- optionally 0.01 to 10 wt%, such as 0.01 to 5 wt% or 0.01 to 0.5 wt%, with respect to PET, of a polyepoxy polymer, such as Joncryl ADR-4370F; and
- optionally 0.01 to 5 wt%, such as 0.01 to 0.5 wt% or 0.01 to 0.2 wt%, with respect to PET of a polyhydric aliphatic alcohol having at least three hydroxyl group, such as pentaerythritol;
for improving the melt characteristics, such as the melt strength, of PET, wherein preferably at least 95 wt%, such as least 97 or 99 wt%, PET is used.

## Patentansprüche

1. Verfahren zur Änderung der Schmelzeigenschaften eines Polyesters, wobei das Verfahren den Schritt des Schmelzmischens des Polyesters mit Folgendem umfasst:
- einem Tetracarbonsäuredianhydrid;
- einem Vernetzer und Kettenverlängerer, der mindestens zwei Gruppen umfasst, die mit einer Carboxylgruppe und einer phenolischen Hydroxylgruppe reagieren können; und
- einer polyfunktionellen Verbindung, die mindestens zwei Gruppen umfasst, welche aus der Gruppe, bestehend aus sterisch nicht gehinderten phenolischen Hydroxylgruppen, wobei sich der Begriff sterisch nicht gehinderte phenolische Hydroxylgruppe auf eine phenolische Hydroxylgruppe bezieht, die nicht mit *tert*-Butylgruppen 2,6-disubstituiert ist, wobei sich die Hydroxylgruppe in Position 1 des Benzolrings befindet, und Carboxylgruppen, ausgewählt sind.

2. Verfahren nach Anspruch 1, wobei es sich bei dem Polyester um einen aliphatischen Polyester oder einen teilaromatischen Polyester handelt, wobei der Polyester vorzugsweise ein teilaromatischer Polyester ist.

3. Verfahren nach Anspruch 2, wobei es sich bei dem Polyester um Polyethylenterephthalat (PET), wie ein Polyethylenterephthalat (PET) mit einer Grundviskosität gemäß ASTM D2857-95 von 0,4 bis 1,0 dl/g oder einer Grundviskosität gemäß ASTM D5225-09 von 0,4 bis 1,0 dl/g, handelt.

4. Verfahren nach einem der Ansprüche 1 bis 3, wobei zuerst das Polyester geschmolzen wird, wonach das Tetracarbonsäuredianhydrid, der Vernetzer und Kettenverlängerer, der mindestens zwei Gruppen umfasst, die mit einer Carboxylgruppe und einer phenolischen Hydroxylgruppe reagieren können, und die polyfunktionelle Verbindung zugegeben werden; und/oder
wobei das Tetracarbonsäuredianhydrid zu dem Polyester gegeben wird, bevor der Vernetzer und Kettenverlängerer, der mindestens zwei Gruppen umfasst, die mit einer Carboxylgruppe und einer phenolischen Hydroxylgruppe reagieren können, zugegeben wird.

5. Verfahren nach einem der Ansprüche 1 bis 4, wobei die Verweilzeit während des Schmelzmischens 5 bis 30 Minuten, wie 5 bis 15 Minuten, beträgt, und wobei die Temperatur während des Schmelzmischens 250 °C bis 350 °C, wie 250 °C bis 300 °C, beträgt.

6. Verfahren nach einem der Ansprüche 1 bis 7, wobei es sich bei dem Tetracarbonsäuredianhydrid um Pyromellitsäuredianhydrid oder ein aromatisches Tetracarbonsäuredianhydrid der allgemeinen Formel (I) handelt, 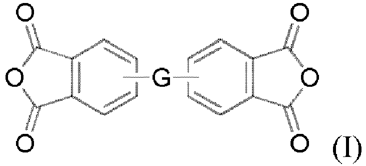 wobei "G" eine Direktbindung oder eine zweiwertige Gruppe, ausgewählt aus der Gruppe, bestehend aus einer Carbonylgruppe, einer Amidgruppe (-C(O)NH- oder -NHC(O)-), einer Estergruppe (-C(O)O- oder -OC(O)-), einer Methylengruppe, einer Sulfongruppe, einer Sulfidgruppe, einer Ethergruppe, einer -C(O)-Phenylen-C(O)-Gruppe, einer Isopropylidengruppe, einer Hexafluorisopropylidengruppe, einer 3-Oxyphenoxygruppe, einer 4-Oxyphenoxygruppe, einer 4'-Oxy-4-biphenoxygruppe und einer 4-[1-(4-Oxyphenyl)-1-methylethyl]phenoxygruppe, bedeutet; und
"G" mit der 4- oder 5-Position bzw. der 4'- oder 5'-Position in den Isobenzofuran-1,3-dionresten verbunden ist; das Tetracarbonsäuredianhydrid ist vorzugsweise aus der Gruppe ausgewählt, die aus Pyromellitsäuredianhydrid, 4,4'-Oxydiphthalsäureanhydrid, 2,2-Bis-[4-(3,4-dicarboxyphenoxy)phenyl]propandianhydrid, 3,3',4,4'-Benzophenontetracarbonsäuredianhydrid, 3,3',4,4'-Tetracarboxybiphenyldianhydrid, 4,4',5,5'-Sulfonyldiphthalsäureanhydrid und 5,5'-(Perfluorpropan-2,2-diyl)bis(isobenzofuran-1,3-dion) besteht.

7. Verfahren nach einem der Ansprüche 1 bis 6, wobei es sich bei dem Vernetzer und Kettenverlängerer, der mindestens zwei Gruppen umfasst, die mit einer Carboxylgruppe und einer phenolischen Hydroxylgruppe reagieren können, um Folgendes handelt:
- eine Verbindung nach einer der allgemeinen Formeln (II) und (III), 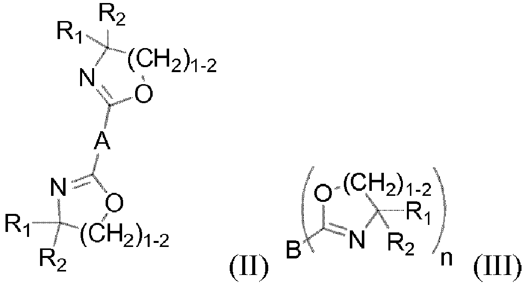 wobei
"A" eine Direktbindung, ein Arylenrest, wie Phenylen, oder ein C₁₋₁₂-Alkylenrest ist;
R₁ und R₂ unabhängig voneinander aus der Gruppe ausgewählt sind, die aus einem Wasserstoffatom und einem C₁₋₅-Alkylrest besteht;
"n" eine ganze Zahl von 3 bis 5 ist;
"B" ein aromatischer Kohlenwasserstofifrest, wie ein Benzolrest, oder ein C₁₋₁₂-Alkanrest ist; wie eine Verbindung, ausgewählt der Gruppe, bestehend aus: 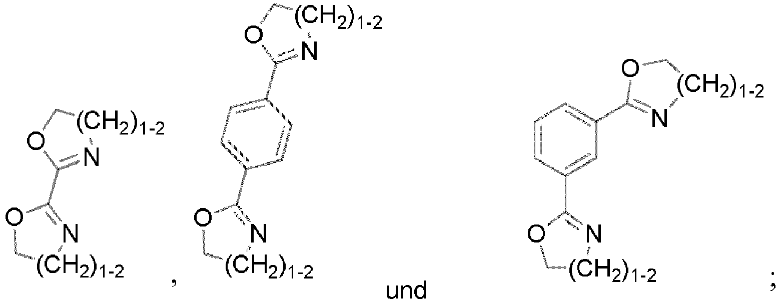
- ein Oligomer oder Polymer, erhältlich durch Copolymerisation von 2-Vinyl-4,5-dihydrooxazol oder 2-(Prop-1-en-2-yl)-4,5-dihydrooxazol und einem Comonomer, das aus der Gruppe ausgewählt ist, die aus Ethen, Propen, Styrol, Vinylacetat, Alkylacrylat, Alkylmethacrylat, Acrylnitril und Vinylchlorid besteht; oder
- ein Polyepoxid, wie ein Polyepoxid, das aus der Gruppe ausgewählt ist, die aus Epoxiden auf Basis von Bisphenol A und F, cycloaliphatischen Epoxiden, Epoxidharzen auf Novolak-Basis, Diglycidylglycidyloxyanilin, Trimethylolpropantriglycidylether, Pentaerythrittetraglycidylether und Tetraglycidylmethylendianilin besteht.

8. Verfahren nach einem der Ansprüche 1 bis 7, wobei die polyfunktionelle Verbindung mindestens eine, vorzugsweise mindestens zwei, sterisch nicht gehinderte phenolische Hydroxylgruppen umfasst.

9. Verfahren nach einem der Ansprüche 1 bis 8, wobei die polyfunktionelle Verbindung Folgendes ist:
- ein Phenolharz wie ein Novolak;
- eine Verbindung der Formel (IV) 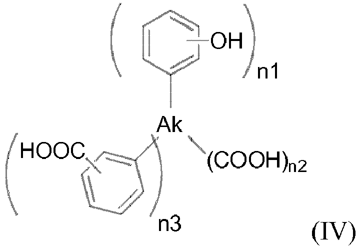 wobei
"n1" eine ganze Zahl von 0 (Null) bis 10, wie 1 bis 5, ist;
"n2" eine ganze Zahl von 0 (Null) bis 10, wie 0 (Null) bis 5, ist;
"n3" eine ganze Zahl von 0 (Null) bis 10, wie 0 (Null) bis 5, ist;
die Summe von "n1", "n2" und "n3" mindestens 2, und vorzugsweise mindestens 3, beträgt; und
"Ak" für einen geradkettigen oder verzweigten Alkanrest mit 1 bis 12 Kohlenstoffatomen, wie 1 bis 6 Kohlenstoffatomen, steht;
- ausgewählt aus der Gruppe, bestehend aus: 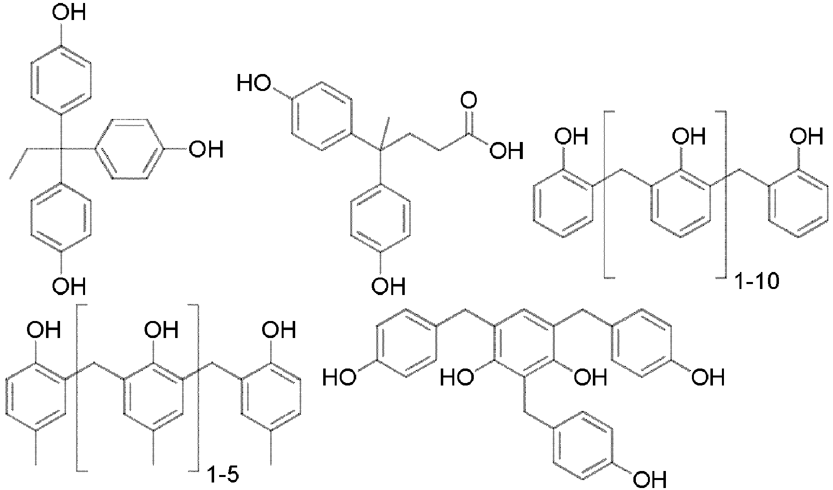 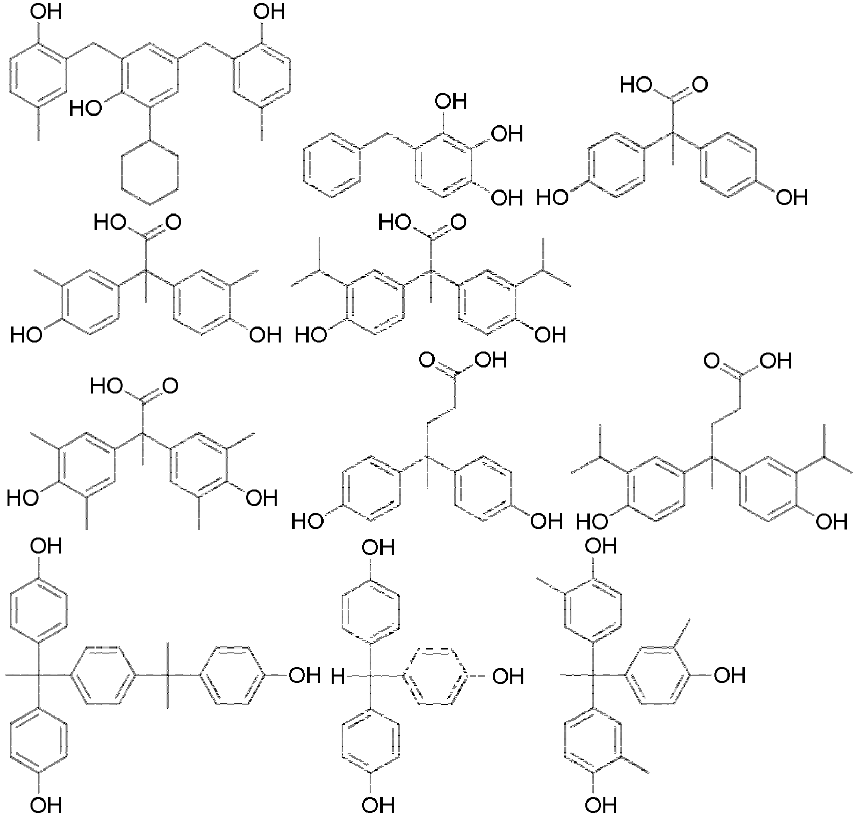 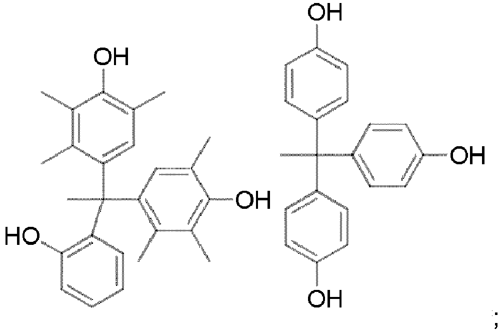 oder
- ausgewählt aus der Gruppe, bestehend aus:

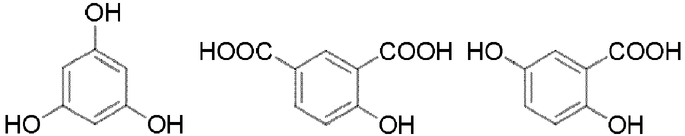

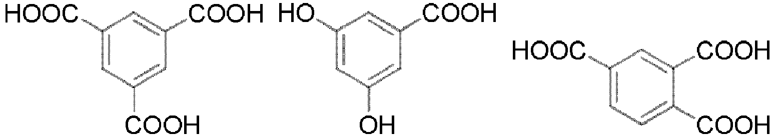

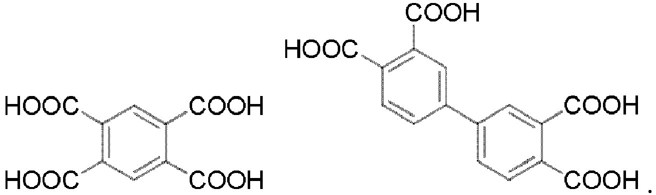

10. Verfahren nach einem der Ansprüche 1 bis 9, wobei die polyfunktionelle Verbindung mindestens zwei, vorzugsweise mindestens drei, p-Hydroxyphenylgruppen und/oder Carboxylgruppen umfasst.

11. Verfahren nach einem der Ansprüche 1 bis 10, wobei auch ein mehrwertiger aliphatischer Alkohol, der mindestens drei Hydroxylgruppen umfasst, mit dem Polyester schmelzgemischt wird; und/oder
wobei auch ein Blähmittel, ein Treibmittel, ein Schaumbildner, ein Weichmacher, ein Gleitmittel, ein Schlagzähmodifikator, ein Modifikator der Isolationseigenschaften, ein Pigment, ein Füllstoff, ein Antioxidans, ein UV-Stabilisator und/oder ein Farbverbesserer mit dem Polyester schmelzgemischt wird.

12. Polyester mit veränderten Schmelzeigenschaften, der mit dem Verfahren nach einem der Ansprüche 1 bis 11 erhältlich ist.

13. Verfahren zur Herstellung eines Gegenstandes, der einen Polyester mit erhöhter Beständigkeit gegen plastische Verformung und/oder geringer Kriechneigung umfasst, welches die folgenden Schritte umfasst:
- Ändern der Schmelzeigenschaften des Polyesters durch Anwendung des Verfahrens nach einem der Ansprüche 1 bis 12; und
- Formen des geschmolzenen Polyesters zu einem Gegenstand, wie einer Flasche, einer Folie, einem Rohr oder einem Schaumstoff.

14. Verfahren nach Anspruch 13, wobei das Formen mittels Extrudieren, Spritzgießen, Blasformen, Schäumen und/oder Streckblasformen erfolgt.

15. Gegenstand, der mit dem Verfahren nach einem der Ansprüche 13 oder 14 erhältlich ist.

16. Verwendung eines Tetracarbonsäuredianhydrids, eines Vernetzers und Kettenverlängerers, der mit einer Carboxylgruppe und einer phenolischen Hydroxylgruppe reagieren kann, und einer polyfunktionellen Verbindung, die mindestens zwei Gruppen umfasst, welche aus der Gruppe, bestehend aus sterisch nicht gehinderten phenolischen Hydroxylgruppen, wobei sich der Begriff sterisch nicht gehinderte phenolische Hydroxylgruppe auf eine phenolische Hydroxylgruppe bezieht, die nicht mit *tert*-Butylgruppen 2,6-disubstituiert ist, wobei sich die Hydroxylgruppe in Position 1 des Benzolrings befindet, und Carboxylgruppen, ausgewählt sind, zur Verbesserung der Schmelzeigenschaften, wie der Schmelzfestigkeit, eines Polyesters, wie PET.

17. Verwendung nach Anspruch 16, wobei
der Vernetzer und Kettenverlängerer eine Verbindung ist, die mindestens zwei 1,3-Oxazolinreste oder mindestens zwei [5,6-Dihydro-4H-1,3-oxazin]-Reste umfasst;
die polyfunktionelle Verbindung ein Novolak ist;
auch ein Polyepoxypolymer, wie Joncryl ADR-4370F, verwendet wird, um die Schmelzeigenschaften des Polyesters zu verbessern; und/oder
auch ein mehrwertiger aliphatischer Alkohol mit mindestens drei Hydroxylgruppen, wie Pentaerythrit, verwendet wird, um die Schmelzeigenschaften des Polyesters zu verbessern.

18. Verwendung von:
- 0,01 bis 5 Gew.-%, bezogen auf PET, wie 0,01 bis 1 Gew.-% oder 0,01 bis 0,5 Gew.-%, eines Tetracarbonsäuredianhydrids, wie PMDA oder BTDA;
- 0,01 bis 10 Gew.-%, bezogen auf PET, wie 0,01 bis 5 Gew.-% oder 0,01 bis 0,5 Gew.-%, eines Vernetzers und Kettenverlängerers, der mit einer Carboxylgruppe und einer phenolischen Hydroxylgruppe reagieren kann, wie eine Verbindung, die mindestens zwei 1,3-Oxazolinreste umfasst, z. B. 2,2'-(1,3-Phenylen)bis(4,5-dihydrooxazol), das auch als 1,3-Phenylenbisoxazolin (PBO) bekannt ist, oder mindestens zwei [5,6-Dihydro-4H-1,3-oxazin]-Reste umfasst;
- 0,01 bis 10 Gew.-%, bezogen auf PET, wie 0,01 bis 5 Gew.-% oder 0,01 bis 0,5 Gew.-%, eines Phenolharzes, wie eines Phenolformaldehydharzes, z. B. Novolak, das mindestens zwei nicht umgesetzte, sterisch nicht gehinderte phenolische Hydroxylgruppen umfasst, wobei sich der Begriff sterisch nicht gehinderte phenolische Hydroxylgruppe auf eine phenolische Hydroxylgruppe bezieht, die nicht mit *tert*-Butylgruppen 2,6-disubstituiert ist, wobei sich die Hydroxylgruppe in Position 1 des Benzolrings befindet;
- gegebenenfalls 0,01 bis 10 Gew.-%, bezogen auf PET, wie 0,01 bis 5 Gew.-% oder 0,01 bis 0,5 Gew.-%, eines Polyepoxypolymers, wie Joncryl ADR-4370F; und
- gegebenenfalls 0,01 bis 5 Gew.-%, bezogen auf PET, wie 0,01 bis 0,5 Gew.-% oder 0,01 bis 0,2 Gew.-%, eines mehrwertigen aliphatischen Alkohols mit mindestens drei Hydroxylgruppen, wie Pentaerythrit;
zur Verbesserung der Schmelzeigenschaften, wie der Schmelzfestigkeit, von PET, wobei vorzugsweise mindestens 95 Gew.-%, wie mindestens 97 oder 99 Gew.%, PET verwendet werden.

## Revendications

1. Procédé pour modifier les caractéristiques à l'état fondu d'un polyester, lequel procédé comprend l'étape de mélange à l'état fondu dudit polyester avec :
- un dianhydride tétracarboxylique ;
- un agent de réticulation et d'extension de chaîne comprenant au moins deux groupes qui sont capables de réagir avec un groupe carboxy et un groupe hydroxyle phénolique ; et
- un composé polyfonctionnel comprenant au moins deux groupes choisis dans l'ensemble consistant en groupes hydroxyles phénoliques non stériquement encombrés, le terme groupe hydroxyle phénolique non stériquement encombré désignant un groupe hydroxyle phénolique qui n'est pas disubstitué en positions 2,6, le groupe hydroxyle se trouvant en position 1 du cycle benzène, avec des groupes *tert*-butyle et des groupes carboxy.

2. Procédé selon la revendication 1, dans lequel le polyester est un polyester aliphatique ou un polyester semi-aromatique, de préférence, ledit polyester est un polyester semi-aromatique.

3. Procédé selon la revendication 2, dans lequel le polyester est un polyéthylène téréphtalate (PET), tel qu'un polyéthylène téréphtalate (PET) ayant une viscosité intrinsèque selon la norme ASTM D2857-95 de 0,4 à 1,0 dl/g, ou une viscosité intrinsèque selon la norme ASTM D5225-09 de 0,4 à 1,0 dl/g.

4. Procédé selon l'une quelconque des revendications 1 à 3, dans lequel le polyester est tout d'abord fondu, puis le dianhydride tétracarboxylique, l'agent de réticulation et d'extension de chaîne comprenant au moins deux groupes qui sont capables de réagir avec un groupe carboxy et un groupe hydroxyle phénolique et le composé polyfonctionnel sont ajoutés ; et/ou
dans lequel le dianhydride tétracarboxylique est ajouté au polyester avant l'ajout de l'agent de réticulation et d'extension de chaîne comprenant au moins deux groupes qui sont capables de réagir avec un groupe carboxy et un groupe hydroxyle phénolique.

5. Procédé selon l'une quelconque des revendications 1 à 4, dans lequel le temps de séjour pendant le mélange à l'état fondu est compris entre 5 et 30 minutes, par exemple entre 5 et 15 minutes et dans lequel la température pendant le mélange à l'état fondu est comprise entre 250 °C et 350 °C, par exemple entre 250 °C et 300 °C.

6. Procédé selon l'une quelconque des revendications 1 à 7, dans lequel ledit dianhydride tétracarboxylique est le dianhydride pyromellitique ou un dianhydride tétracarboxylique aromatique répondant à la formule générale (I), 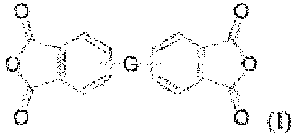 dans laquelle "G" représente une liaison directe ou un groupe divalent choisi dans l'ensemble consistant en un groupe carbonyle, un groupe amide (-C(O)NH- ou -NHC(O)-), un groupe ester (-C(O)O- ou -OC(O)-), un groupe méthylène, un groupe sulfone, un groupe sulfure, un groupe éther, un groupe-C(O)-phénylène-C(O)-, un groupe isopropylidène, un groupe hexafluoro-isopropylidène, un groupe 3-oxyphénoxy, un groupe 4-oxyphénoxy, un groupe 4'-oxy-4-biphénoxy, et un groupe 4-[1-(4-oxyphényl)-1-méthyléthyl]phénoxy ; et
"G" est lié à la position 4 ou 5-position et à la position 4' ou 5', respectivement, dans les résidus isobenzofurane-1,3-dione ; de préférence, ledit dianhydride tétracarboxylique est choisi dans l'ensemble consistant en dianhydride pyromellitique, anhydride 4,4'-oxydiphtalique, dianhydride de 2,2-bis-[4-(3,4-dicarboxyphénoxy)phényl]-propane, dianhydride d'acide 3,3',4,4'-benzophénonetétracarboxylique, dianhydride de 3,3',4,4'-tétracarboxybiphényle, anhydride 4,4',5,5'-sulfonyldiphtalique et 5,5'-(perfluoropropane-2,2-diyl)bis(isobenzofurane-1,3-dione).

7. Procédé selon l'une quelconque des revendications 1 à 6, dans lequel ledit agent de réticulation et d'extension de chaîne comprenant au moins deux groupes qui sont capables de réagir avec un groupe carboxy et un groupe hydroxyle phénolique est :
- un composé répondant à l'une quelconque des formules générales (II) et (III), 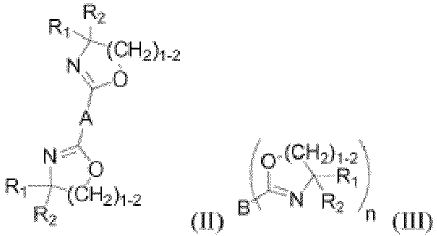 dans lesquelles
"A" représente une liaison directe, un groupe arylène, tel qu'un groupe phénylène, ou un groupe alkylène en C1-12 ;
R1 et R2, indépendamment l'un de l'autre, sont choisis dans l'ensemble consistant en un atome d'hydrogène et des groupes alkyle en C1-C5 ;
"n" est un nombre entier compris entre 3 et 5 ;
"B" représente un résidu d'un hydrocarbure aromatique, tel qu'un résidu benzène, ou un résidu alcane en C1-12, par exemple un composé choisi dans l'ensemble consistant en : 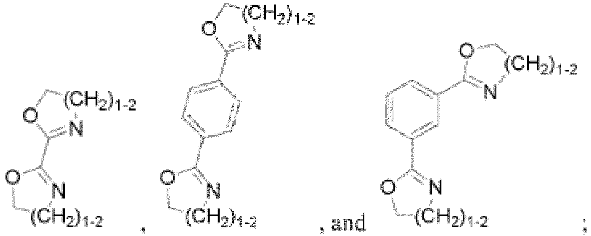
- un oligomère ou un polymère pouva et re obtenu par copolymérisation de 2-vinyl-4,5-dihydrooxazole, ou de 2-(prop-1-én-2-yl)-4,5-dihydrooxazole, et d'un comonomère choisi dans l'ensemble consistant en éthène, propène, styrène, acétate de vinyle, acrylate d'alkyle, méthacrylate d'alkyle, acrylonitrile et chlorure de vinyle ; ou
- un polyépoxyde, tel qu'un polyépoxyde choisi dans l'ensemble consistant en époxydes à base de bisphénol A et F, époxydes cycloaliphatiques, résines époxy à base de novolaque, diglycidyl-glycidyloxyaniline, éther triglycidylique de triméthylolpropane, éther tétraglycidylique de pentaérythritol et tétraglycidyl-méthylènedianiline.

8. Procédé selon l'une quelconque des revendications 1 à 7, dans lequel ledit composé polyfonctionnel comprend au moins un, de préférence au moins deux, groupes hydroxyles phénoliques non stériquement encombrés.

9. Procédé selon l'une quelconque des revendications 1 à 8, dans lequel ledit composé polyfonctionnel est :
- une résine phénolique, comme la novolaque ;
- un composé répondant à la formule (IV) 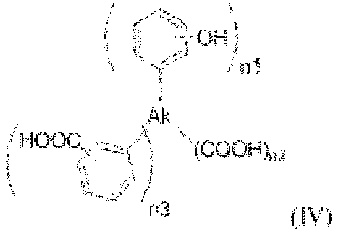 dans laquelle
"n1" est un nombre entier compris entre 0 (zéro) et 10, par exemple entre 1 et 5 ;
"n2" est un nombre entier compris entre 0 (zéro) et 10, par exemple entre 0 (zéro) et 5 ;
"n3" est un nombre entier compris entre 0 (zéro) et 10, par exemple entre 0 (zéro) et 5 ;
la somme de "n1", "n2" et "n3" est au moins égale à 2, et préférence au moins égale à 3 ; et
"Ak" représente un résidu alcane linéaire ou ramifié comprenant 1 à 12 atomes de carbone, par exemple 1 à 6 atomes de carbone ;
- choisi dans l'ensemble consistant en : 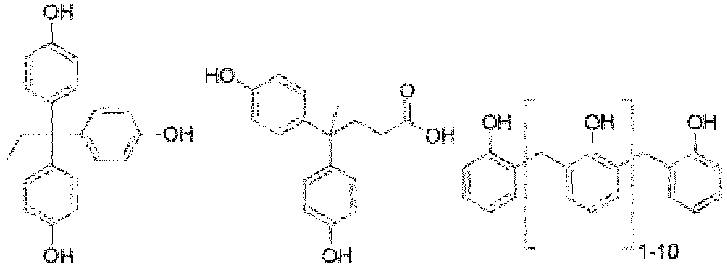 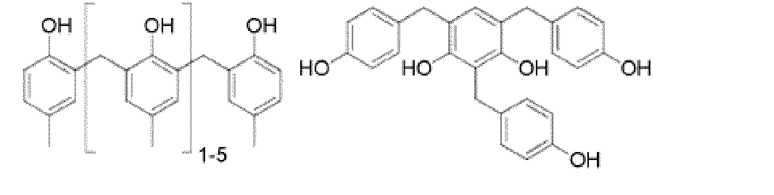 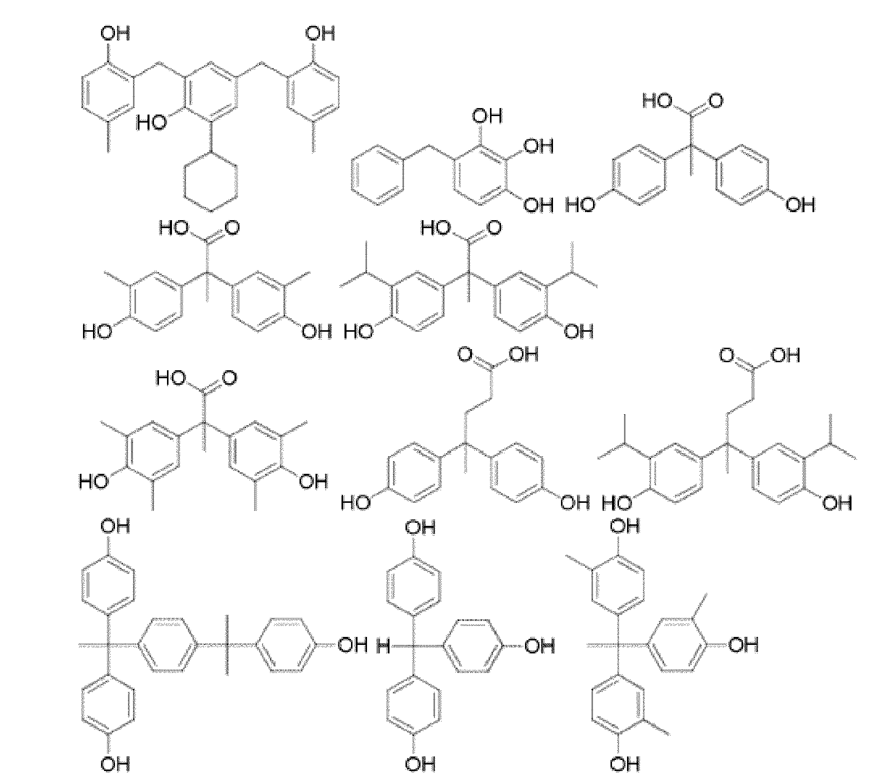 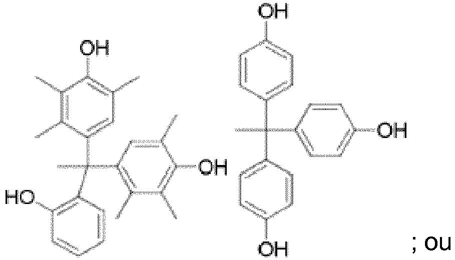 choisi dans l'ensemble consistant en :

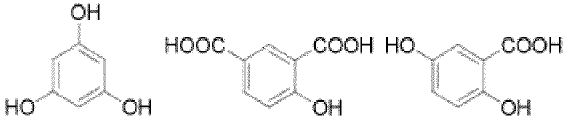

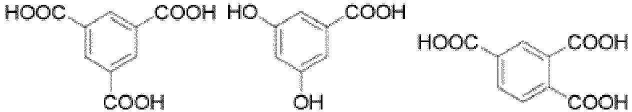

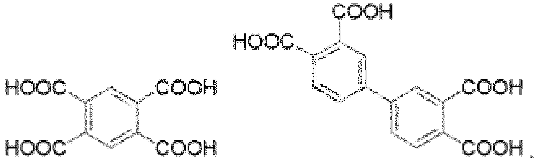

10. Procédé selon l'une quelconque des revendications 1 à 9, dans lequel ledit composé polyfonctionnel comprend au moins deux, de préférence au moins trois, groupes p-hydroxyphényle et/ou carboxy.

11. Procédé selon l'une quelconque des revendications 1 à 10, dans lequel un polyol aliphatique comprenant au moins trois groupes hydroxyle est également mélangé à l'état fondu avec le polyester, et/ou
dans lequel un agent gonflant, un agent d'expansion, un agent moussant, un plastifiant, un lubrifiant, un modificateur de résistance au choc, un modificateur d'isolation, un pigment, une charge, un antioxydant, un agent de stabilisation aux UV et/ou un améliorateur de couleur sont également mélangés à l'état fondu avec le polyester.

12. Polyester présentant des caractéristiques à l'état fondu modifiées pouvant être obtenu par le procédé selon l'une quelconque des revendications 1 à 11.

13. Procédé de production d'un article comprenant un polyester présentant une résistance accrue à la déformation plastique et/ou des faibles propriétés de fluage comprenant les étapes suivantes :
- modification des caractéristiques à l'état fondu dudit polyester au moyen du procédé selon l'une quelconque des revendications 1 à 12 ; et
- façonnage dudit polyester fondu en un article, comme une bouteille, un film, un tuyau ou une mousse.

14. Procédé selon la revendication 13, dans lequel ledit façonnage est effectué par extrusion, moulage par injection, moulage par soufflage, moussage et/ou moulage par étirage-soufflage.

15. Article pouvant être obtenu par le procédé de l'une quelconque des revendications 13 ou 14.

16. Utilisation d'un dianhydride tétracarboxylique, d'un agent de réticulation et d'extension de chaîne capable de réagir avec un groupe carboxy et un groupe hydroxyle phénolique et d'un composé polyfonctionnel comprenant au moins deux groupes choisis dans l'ensemble consistant en groupes hydroxyles phénoliques non stériquement encombrés, le terme groupe hydroxyle phénolique non stériquement encombré désignant un groupe hydroxyle phénolique qui n'est pas disubstitué en positions 2,6, le groupe hydroxyle se trouvant en position 1 du cycle benzène, avec des groupes *tert*-butyle et des groupes carboxy, pour améliorer les caractéristiques à l'état fondu, comme la résistance à l'état fondu, d'un polyester, comme un PET.

17. Utilisation selon la revendication 16, dans laquelle
ledit agent de réticulation et d'extension de chaîne est un composé comprenant au moins deux résidus 1,3-oxazoline, ou au moins deux résidus [5,6-dihydro-4H-1,3-oxazine] ;
ledit composé polyfonctionnel est une novolaque ;
un polymère polyépoxy, comme Joncryl ADR-4370F, est également utilisé pour améliorer les caractéristiques à l'état fondu du polyester ; et/ou
un polyol aliphatique contenant au moins trois groupes hydroxyle, comme le pentaérythritol, est également utilisé pour améliorer les caractéristiques à l'état fondu du polyester.

18. Utilisation de :
- 0,01 à 5 % pds, par exemple 0,01 à 1 % pds ou 0,01 à 0,5 % pds, par rapport au PET, d'un dianhydride tétracarboxylique, comme PMDA ou BTDA ;
- 0,01 à 10 % pds, par exemple 0,01 à 5 % pds ou 0,01 à 0,5 % pds, par rapport au PET, d'un agent de réticulation et d'extension de chaîne capable de réagir avec un groupe carboxy et un groupe hydroxyle phénolique, par exemple un composé comprenant au moins deux résidus 1,3-oxazoline, par exemple le 2,2'-(1,3-phénylène)bis(4,5-dihydrooxazole) également appelé 1,3-phénylène-bis-oxazoline (PBO), ou au moins deux résidus [5,6-dihydro-4H-1,3-oxazine] ;
- 0,01 à 10 % pds, par exemple 0,01 à 5 % pds ou 0,01 à 0,5 % pds, par rapport au PET, d'une résine phénolique, comme une résine de phénol formaldéhyde, par exemple novolaque, comprenant au moins deux groupes hydroxyles phénoliques non stériquement encombrés n'ayant pas réagi, le terme groupe hydroxyle phénolique non stériquement encombré désignant un groupe hydroxyle phénolique qui n'est pas disubstitué en positions 2,6, le groupe hydroxyle se trouvant en position 1 du cycle benzène, avec des groupes *tert-*butyle ;
- éventuellement, 0,01 à 10 % pds, par exemple 0,01 à 5 % pds ou 0,01 à 0,5 % pds, par rapport au PET, d'un polymère polyépoxy, comme Joncryl ADR-4370F ; et
- éventuellement, 0,01 à 5 % pds, par exemple 0,01 à 0,5 % pds ou 0,01 à 0,2 % pds, par rapport au PET, d'un polyol aliphatique contenant au moins trois groupes hydroxyle, comme le pentaérythritol ;
pour améliorer les caractéristiques à l'état fondu, comme la résistance à l'état fondu, d'un PET, dans laquelle de préférence au moins 95 % pds, par exemple au moins 97 ou 99 % pds de PET, sont utilisés.
